# EUROPEAN PATENT APPLICATION

(11) **EP 4 796 408 A1**
(43) Date of publication of application: **26.08.2026**
(21) Application number: 25158991.7
(22) Date of filing: 20.02.2025
(51) Int. Cl.: B60W 50/00, B60W 50/10, B60W 50/14, B60W 40/08, B60W 30/09, B60W 30/095, B60W 50/08

(54) **CONSTRAINT-PERSONALIZED DRIVER SUPPORT BY HUMAN FEEDBACK**

(71) Applicant: HONDA MOTOR CO., LTD., Tokyo 105-8404 (JP)
(72) Inventor: Puphal, Tim, 63073 Offenbach/Main (DE); Krüger, Matti, Saitama, 351-0188 (JP); Hirano, Ryohei, Saitama, 351-0193 (JP); Kimata, Akihito, Saitama, 351-0193 (JP)
(74) Representative: Roth, Sebastian

(57) **Abstract**

The invention concerns a computer-implemented method and a system for personalization of an assistance system that assists a user in operating a vehicle, the method comprises outputting, by a processor, a control signal for executing a support action by the assistance system. At least one sensor acquires information on a user reaction of the user in response to the executed support action. The processor determines a correction value for at least one parameter of the assistance system based on the acquired information on the user reaction, and generates at least one personalized parameter of the assistance system by adapting the at least one parameter with the determined correction value. The method further comprises determining, by the processor, the correction value based on at least one of the information on the user reaction and a predicted risk related to a situation, in which the assistance system executed the support action.

## Description

The invention is in the field of assistance systems for supporting a driver of a vehicle. In particular, a computer-implemented method for assisting the driver and a driver assistance system are presented.

The field of automated driver assistance in a road traffic environment represents an application area, in which a mobile agent moves with support of an assistance system in a highly dynamic environment with a plurality of other mobile agents. Agents may be traffic participants including, but not limited to, vehicles, pedestrians, cyclists, motorcyclists, motor vehicles, e.g. cars, trucks and busses in a traffic scenario in the road traffic environment.

When human drivers operate vehicles in an environment where also other agents are present, there is generally a risk of a collision between the agents, in particular since the density and dynamics of traffic generally increased. It proves challenging for the driver of a vehicle to observe all the other agents in the environment in order to react in due time to their behavior in order to avoid collisions. There exist further risks that the driver of a vehicle encounters when operating the vehicle, for example curve risks or regulatory risks. The performance of modern processors and availability of sensors like RADAR sensors, cameras, LIDAR sensors providing a processing unit with information on the environment of the vehicle enables assistance for the driver when operating the vehicle. US 11,220,261 B2 discloses a driver assistance system for planning behaviors for an ego-vehicle mounting such driver assistance system, which plans trajectories for the ego-vehicle using prediction models and a behavior relevant score while offering competitive computational cost. However, style and personal preference in operating a vehicle significantly varies between individual drivers. Thus, in some situations, an assistance system proposes behaviors for the ego-vehicle or even interferes, e.g. in a case of semi-automated driving, with control operations by the driver in a way that is at least uncomfortable or even distracting to the driver.

There are some approaches that try to adapt the systems to individual operator's behaviors so that the operator is not bothered and therefore acceptance of the assistance offered by the system increases.

Patent US 11,535,262 B2 discloses a driving assistance system for highly assisted driving (HAD) and for autonomous vehicles. The driving assistance system addresses sources of potential discomfort of the user travelling in a vehicle when there exist differences in the driving style when the user is driving the vehicle themselves on the one hand and the user is passenger in the vehicle on the other hand. The driving assistance system generates and uses a passenger-based driving profile of the vehicle, which is generated based on sensor data indicating a reaction of the user to at least one vehicle driving behavior experienced by the user as a vehicle passenger. The driving assistance system detects an identity of the user, and retrieves the passenger profile based on the retrieved identity. The assistance system regards user exclusively as a passenger in the vehicle. Even more, the assistance system neglects other factors influencing the user's reaction to an executed system action, e.g., a general attentiveness of the user. Hence, the personalization of the driving assistance system is not optimal, and the relation of an assumed user reaction to the previously executed system action when generating the passenger-based driving profile may be unclear or even not existent.

The prior art approach also may result in a personalization of the assistance system with preferences of the user that render the assistance provided by the system unsafe. This is the case, if, e.g., a negative user feedback for a correct and safe system support action is used to personalize parameters of the assistance system based on the wrong negative user reaction to the executed support action adequate in the situation.

The problem solved by the invention is to improve adaptation of driving assistance of vehicles to the expectations of users, while simultaneously adhering to safety aspects of the provided driving support.

The computer-implemented method according to independent claim 1 and the assistance system according to the corresponding independent claim provide an advantageous solution to the aforementioned problem.

In a first aspect of the invention, the computer-implemented method for personalization of an assistance system for assisting a user in operating a vehicle comprises outputting, by a processor, a control signal for executing a support action by the assistance system. At least one sensor acquires information on a user reaction in response to the executed support action. The processor determines a correction value for at least one parameter of the assistance system based on at least one of the acquired information on the user reaction and a predicted risk related to a situation, in which the assistance system executed the support action, and generates at least one personalized parameter of the assistance system by adapting the at least one parameter with the determined correction value.

The user reaction includes a user reaction of the user assisted by the assistance system. The user reaction may also include the reactions of further passengers in the vehicle.

The situation is a current traffic situation in the environment of the vehicle, which sensors of the vehicle monitor, and on which the assistance system generates a representation based on the sensor data for further processing in a prediction subsystem of the assistance system.

The computer-implemented method is advantageous since it evaluates a reaction of the user to a situation, in which the assistance system executed the support action. Hence, the method provides a framework for basing the assistance to the user on information related to the situation, in particular, to the user reaction as far as it is considered related to the situation and the executed support action when determining the correction value. Alternatively, or additionally, the method evaluates a predicted risk related to a situation, in which the assistance system executed the support action, for determining the correction value. The framework of the method therefore enables to base the assistance on a predicted risk related to the situation in which the assistance system executed the support action. The method then generates the at least one personalized parameter of the assistance system by adapting the at least one parameter with the determined correction value. Thereby the computer-implemented method provides a personalization of system parameters using the correction value of the assistance system that is executed online during operation of the vehicle (ego-vehicle) equipped with the assistance system (driver assistance system), while the user is operating the vehicle.

The dependent claims define further advantageous embodiments.

In an embodiment, the support action includes at least one of warning, via an output device, the user about the predicted risk in the traffic situation, outputting, via the output device, a behavior recommendation to the user, and controlling, by a vehicle controller, the movement of the vehicle.

The computer-implemented method is advantageous due to providing an adaptive and constrained personalization of system parameters in response to actively executed support actions executed by the assistance system. The computer-implemented method is also advantageous due to assessing reactions of the user with regard to their relevance to the executed support action and the inherent risk of the adaptation of the system parameters by the parameter adaptation offset. The method uses the assessment of the user reactions for determining a correction value for the adaptation of the system parameters.

There exists a plurality of possibility of outputting warning signals including traffic related and risk-related information to a driver of a vehicle. The output device may use acoustic signals, optic signals or haptic signals for conveying information on predicted risks in a traffic situation to the driver. US 12,005,921 B2 proposes an approach of assisting a user, e.g. the driver of a vehicle in performing a task in a dynamic environment by modulating signals with a relevance of a behavior based on the predicted evolvement of the situation and outputting the modulated signals, e.g., an infotainment sound, to the assisted user. Modulation parameters of the modulated signals, e.g. a modulation strength or a signal amplitude represents a system parameter of the assistance system subject to an adaptation and personalization.

The computer-implemented method of an embodiment comprises the determined correction value including at least one parameter adaptation offset and an offset scaling factor.

The offset scaling factor may be determined to weight the parameter adaptation offset for the personalization of the at least one system parameter. E.g., the determined correction value comprises the at least one parameter adaptation offset multiplied with the determined constraint personalization factor. This offers a computationally efficient method well suited for executing the method during operation of the assistance system.

The computer-implemented method of an embodiment comprises steps of determining, by the processor, based on the information on the user reaction, a probability for the user reaction relating to the to the executed support action, and determining, by the processor, the offset scaling factor indicating whether the user reaction relates to the executed support action based on the determined probability.

The determined probability, e.g. having a probability value in the range from 0 to 1, may ensure a computationally efficient processing well suited for executing the method during operation of the assistance system.

In an alternative example, the method may determine the probability for the user reaction relating to the executed support action in a binary classification. E.g., in the binary classification, the method determines the offset scaling factor either with the value of 0 when classifying the reaction of the user as unrelated, or with the value of 1 when classifying the reaction of the user as related to the support action.

In an embodiment of the computer-implemented method, the step of determining, by the processor, the probability of the user reaction relating to the executed support action includes estimating, by the processor, a human state based on the acquired information on the user reaction, and determining, by the processor, based on the estimated human state, the probability of the user reaction relating to the executed support action.

There exist approaches for determining the human state of a user based on the facial expression of the user, e.g., by monitoring the eyes of the user, acoustic utterances including in particular speech of the user based on sensor signals from cameras or microphones. The human state on the other hand enables to determine conclusively whether the user is attentive to the environment of the vehicle, and in particular whether the user's reaction is related to the situation in the environment of the ego-vehicle. Hence, the human state provides a viable possibility for determining the scaling factor for weighting the parameter adaptation offset, for example.

The computer-implemented method of an embodiment comprises determining, by the processor, the probability of the user reaction relating to the executed support action based on at least one further parameter, wherein the at least one further parameter includes at least one of a parameter internally to the vehicle, a parameter externally to the vehicle, and the predicted risk related to the situation.

The parameter internally to the vehicle may include, e.g., an acoustic noise level inside the vehicle.

The parameter externally to the vehicle may include, e.g., a weather parameter in the environment of the vehicle, in particular a parameter indicating rain, snow, or fog, for example.

Taking further parameters, and in particular taking the predicted risk into account, improves the personalization of system parameters with regard to relevance of the user's feedback and further ensures safety of operation of the assistance system using the personalized system parameters.

In an embodiment of the computer-implemented method, the estimated human state includes a state of the user and further a human state of at least one passenger of the vehicle.

Taking the human states of passengers in addition of the human state of the user/driver into account for the adaptation of the system parameters further improves the database used for the personalization of the system parameters, as the passengers may have a different view on the situation in the environment.

The computer-implemented method of an embodiment includes determining, by the processor, the probability of the user reaction relating to the executed support action by using a classification model or a regression.

Using a classification model or a regression includes, e.g., using a trained machine learning based model, by using at least one of a logistic regression, a support vector machine, a model trained via a random forest learning method, and a vision-language model.

In an embodiment of the computer-implemented method, the at least one sensor comprises at least one of a microphone for obtaining acoustic information from the user, a camera for capturing image information of the user, and a heart rate sensor for obtaining heart rate information of the user.

The cited sensors in combination with the processing resources of the assistance system enable to acquire conclusive user information for estimating a human state of the user. Some of the sensors may be sensors already integrated in current vehicles, e.g., a camera or a microphone, or personal devices of the user, e.g. a smartphone combined with wearable sensors for measuring a heartrate of the user.

Acoustic information may in particular include a speech input from the user. The microphone provides acoustic data, which a processor running speech recognition and interpretation software then converts into user information including human speech.

The image information of the user captured by the camera may include a picture or a video depicting the user, in particular a face of the user.

The computer-implemented method according to an embodiment comprises steps of acquiring, by at least one further sensor, information on an environment of the vehicle, generating by the processor, a representation of the situation of the environment of the vehicle, and predicting the risk related to the situation, in which the assistance system executed the support action.

The at least one further sensor comprises, e.g., at least one of a RADAR sensor, a LIDAR sensor, an ultrasonic sensor, and a camera sensor.

Predicting a risk in the situation in the environment of the ego-vehicle forms part of current assistance systems, using approaches such as risk maps, and provides valuable input information for determining the scaling factor, thereby improving the personalization of the system parameter(s) for ensuring safe operation of the assistance system. Details of an assistance system using risk maps are disclosed in patent US 11,220,261 B2. Publication "Online and Predictive Warning System for Forced Lane Changes using Risk Maps" by Tim Puphal et al., in: IEEE Transactions on Intelligent Vehicles , Volume 7, Issue 3, September 2022, pages 616 to 626, discloses further details of an assistance system using risk maps and a survival analysis of vehicle trajectories in road traffic scenarios.

The computer-implemented method of an embodiment comprises correcting, by the processor, the at least one parameter of the assistance system by increasing or decreasing the at least one parameter with the determined correction value.

In particular, the computer-implemented method comprises correcting, by the processor, the at least one parameter of the assistance system by adding the determined correction value to the at least one parameter or subtracting the determined correction value from the at least one parameter.

Hence, the personalization of the system parameters regarding constraints may be computationally efficient implemented and requires only limited processing resources.

The computer-implemented method of another embodiment comprises computing, by the processor, the parameter adaptation offset based on the predicted risk and a current value of the at least one parameter.

In an embodiment, the computer-implemented method comprises computing, by the processor, the offset scaling factor based on a determined class of the situation, information on the user reaction, and stored information on the user reaction in situations of the determined class of the situation.

Hence, the method further improves the quality of the decision whether a reaction of the user is in response to the support action by differentiating between one-time user reactions and repeated user reactions to a same or an at least similar situation in the environment of the ego-vehicle.

The second aspect concerns an assistance system for assisting a user in operating a vehicle. The assistance system comprises a processor configured to output a control signal for executing a support action by the assistance system, and at least one sensor configured to acquire information on a user reaction of the user in response to the executed support action. The processor is further configured to determine a correction value for at least one parameter of the assistance system based on the acquired information on the user reaction, and to generate at least one personalized parameter of the assistance system by adapting the at least one parameter with the determined correction value. The assistance system includes the processor configured to determine the correction value based on at least one of the information on the user reaction and a predicted risk related to a situation, in which the assistance system executed the support action.

The assistance system of an embodiment includes at least one of a driver warning system, an emergency brake assist system, a lane-change assist system, an intersection assist system, and an automatic cruise control system.

The vehicle includes at least one of a ground vehicle, air vehicle, water vehicle, micromobility vehicle, autonomous vehicle, semi-autonomous vehicle. The ground vehicle may include, e.g., a road traffic vehicle, a car, a motorcycle, a truck, or a bus. The aerial vehicle may include, e.g., a plane, a helicopter, an airship, or an unmanned aerial vehicle (UAV). The water vehicle may include, e.g., a boat, a ship, a surface vessel, and a subsea vessel. The micromobility vehicle may include, e.g., a bicycle, an e-bike, a power-assisted bike, a scooter, or a skateboard.

The system according to the second aspect achieves corresponding advantageous effects as discussed with reference to the computer-implemented method of the first aspect.

Another aspect concerns a computer program comprising machine-readable instructions executable by a digital processing apparatus, which, when the program is executed by the digital processing apparatus, cause the digital processing apparatus to perform the computer-implemented method according to an embodiment of the first aspect.

Another aspect concerns a non-transitory computer-readable storage medium embodying a program of machine-readable instructions executable by a digital processing apparatus, which cause the digital processing apparatus to perform the computer-implemented method according to an embodiment of the first aspect.

The following description of embodiments refers to the figures, in which
Fig. 1 shows a flowchart illustrating major steps of the computer-implemented method of an embodiment;
Fig. 2 illustrates an application scenario of a warning system according to prior art in an intersection collision scenario;
Fig. 3 displays a block diagram presenting an overview over the architecture of the system according to an embodiment;
Fig. 4 shows a first embodiment of the computer-implemented method in the intersection collision scenario;
Fig. 5 illustrates the process of system relation estimation for the correction value;
Fig. 6 shows a second embodiment of the computer-implemented method in the intersection collision scenario;
Fig. 7 illustrates the process of risk prediction for estimating the correction value;
Fig. 8 shows a third embodiment of the computer-implemented method in the intersection collision scenario;
Fig. 9 illustrates an application scenario of an emergency brake system in an intersection collision scenario; and
Fig. 10 illustrates a simplified hardware structure of an assistance system for implementing an embodiment;

In the figures, corresponding elements have the same reference signs. The discussion of the figures avoids discussion of same reference signs in different figures wherever considered possible without adversely affecting comprehensibility and avoiding unnecessary repetitions for sake of conciseness.

Agents may be traffic participants including, but not limited to, pedestrians, cyclists, motorcyclists, motor vehicles, e.g. cars trucks and busses in a traffic scenario in the road traffic environment.

Alternative examples for agents moving in dynamically changing scenarios include air vehicles, e.g., manned aircraft, helicopters, unmanned aerial vehicles moving in an airspace environment or sea vehicles in a maritime environment.

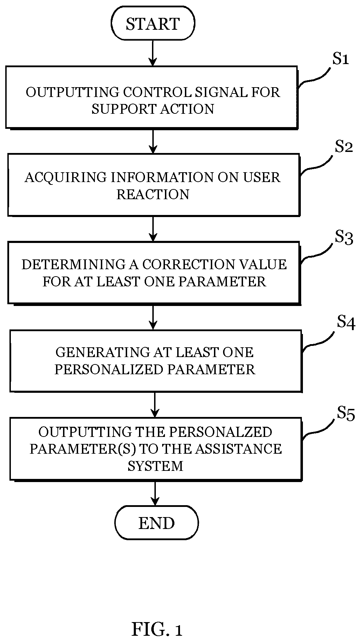

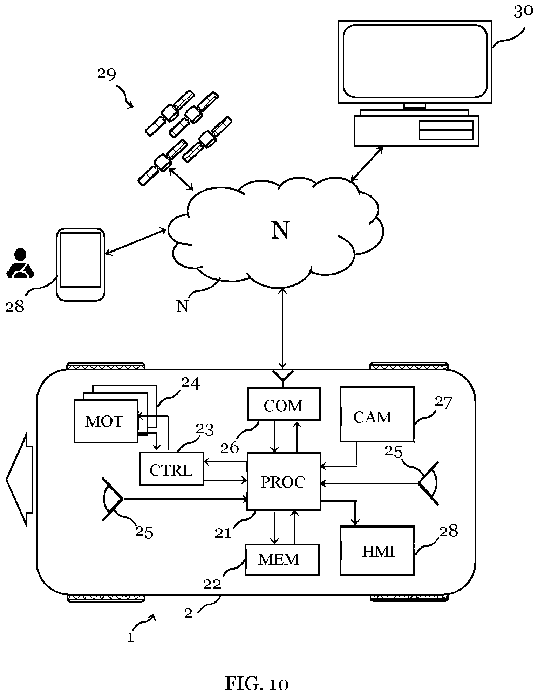

The process steps S1 to S5 of the computer-method illustrated by the flowchart of fig. 1 may be applied in an advanced driver assistance system 1 (assistance system 1) supporting a human in operating a vehicle in a traffic environment. The block diagram of fig. 1 displays a general structure of the processing modules executing the computer-implemented method, while fig. 10 illustrates structural elements and considerations of an assistance system 1 for assisting user in moving in a dynamic traffic environment. The user as discussed in the following embodiments includes at least one of a cyclist, a motorcyclist, and a driver of a road vehicle in a road traffic environment.

Fig. 1 shows a flowchart illustrating major steps of the computer-implemented method of an embodiment.

The computer-implemented method for personalization of the assistance system 1 for assisting a user in operating a vehicle 2 starts in step S1 with outputting, by a processor 21, a control signal for executing a support action by the assistance system 1. The assistance system 1 generates the control signal using at least one parameter of the assistance system 1.

In step S2, at least one sensor 27 acquires information on a user reaction of the user in response to the executed support action, which the assistance system 1 executes for assisting the user.

The processor 21 determines in step S3 a correction value for at least one parameter of the assistance system 1 based on the acquired information on the user reaction.

The processor 21 generates in step S4 at least one personalized parameter of the assistance system 1 by adapting the at least one parameter with the determined correction value.

In step S5, the computer-implemented method then outputs the personalized parameter to the assistance system 1. The assistance system 1 assists then the user using the at least one personalized parameter.

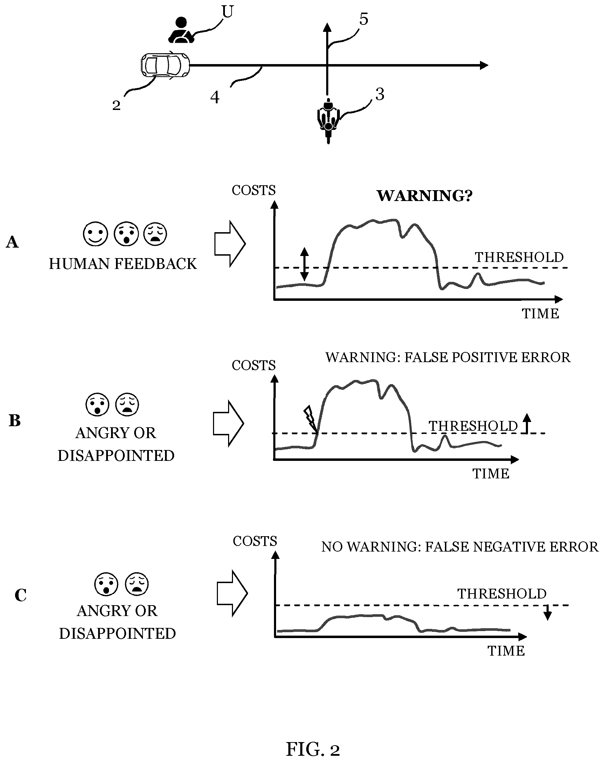

Fig. 2 illustrates an application scenario of a warning system according to prior art in an intersection collision scenario.

The warning system is a specific example of an assistance system 1 or a part of the assistance system 1. The assistance system 1 is integrated into an ego-vehicle 2 and assists the user U in operating the ego-vehicle 2 in the road traffic environment.

The simplified road traffic environment of the scenario depicted in fig. 2 includes two roads intersecting at a right angle. The ego-vehicle 2 cruises on a (first) trajectory 4 and moves towards the intersection on a first road. A further vehicle, e.g. a motorcyclist 3 also approaches towards the intersection, moving along a second trajectory 5 along the second road.

The assistance system 1 predicts the trajectories 4, 5 based on sensor information, e.g. sensor information acquired by sensors 25 of the ego-vehicle 2. The assistance system 1 evaluates the traffic scenario based on the predicted trajectories 4, 5 and determines costs associated with the evaluated traffic scenario. The determined costs may include at least one of safety costs, risk costs, utility costs and comfort costs.

The partial figures A, B, and C of fig. 2 each include on the right portion an example of the determined costs over time of the assistance system 1 starting with a current time =0.

The assistance system 1 compares the determined costs with a warning threshold (threshold). In case, the assistance system 1 determines that the determined cost exceed the threshold, the assistance system 1 outputs a warning via a human machine interface (HMI) 28 to the user U.

The assistance system 1 according to prior art includes a personalization capability for adapting the threshold level of the threshold to the preferences of the user U. The system parameter "warning threshold" of the assistance system 1 of fig. 2 is a variable threshold.

The assistance system 1 includes a sensor monitoring the user U and acquiring user information for the user U. The acquired user information enables the assistance system 1 to obtain a user feedback from the user U in response to a performed support action, e.g. the output warning, or a decision not to output a warning to the user U in a scenario in the environment. The assistance system 1 determines a user state of the user U based on the acquired user information, indicated in the left portion of fig. 2 respectively. The assistance system 1 may include a sensor 25 monitoring the user U, in particular a face of the user U while operating the ego-vehicle 2. For example, the assistance system 1 determines whether the user U is in a pleased state, an indifferent state, an angry state or a disappointed state based on a determined facial expression of the user U.

In partial figure B, relating to an evolvement of the basic traffic scenario of fig. 2, the assistance system 1 compared the determined costs with the threshold, and outputted a warning to the user U due to the determined costs exceeding the threshold.

The assistance system 1 determines that the user U is in an angry or disappointed state in response to the executed support action as indicated in the left portion of partial figure B of fig. 2. The assistance system 1 determines, based on the determined angry or disappointed state of the user in response to the executed support action including the warning to the user that the threshold should be increased to a threshold value exceeding the current threshold value in order to comply with the preferences of the user U.

In partial figure C, relating to an alternate, different evolvement of the basic traffic scenario of fig. 2 compared with partial figure B, the assistance system 1 compared the determined costs with the threshold, determines that the costs fail to reach or exceed the threshold. Hence, the assistance system 1 decides against outputting a warning to the user U.

In partial figure C, the assistance system 1 also determines that the user U is in an angry or disappointed state in response to the decision to dispense with outputting a warning as support action as indicated in the left portion of partial figure C of fig. 2. The assistance system 1 determines, based on the determined angry of disappointed state of the user in response to the missed support action including the warning to the user that the threshold should be decreased to a threshold value smaller the current threshold value in order to comply with the preferences of the user U with regard to a collision warning.

The assistance system 1 of fig. 2 has the capability to adapt a system parameter, e.g. the warning threshold, automatically during operation of the assistance system 1 based on a determined human feedback. The assistance system 1 discussed with reference to fig. 2 suffers from the drawback that a personalization of a system parameter based on the preferences of the user U may result in an unsafe system behavior of the assistance system 1 when operating with the adapted system parameter. E.g., the system parameter may be adapted based on a negative feedback from the user U, which the system obtained in response to a correct and safe support action of the assistance system 1.

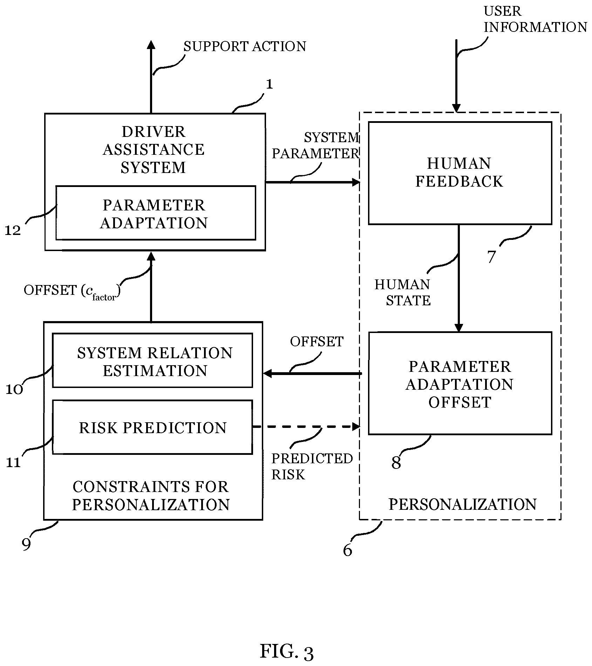

Fig. 3 displays a block diagram presenting an overview over the architecture for personalization of an assistance system 1 according to an embodiment. The assistance system 1 overcomes the disadvantage of the known parameter personalization in the assistance system 1 by integrating the computer-implemented method according to the flowchart of fig. 1 with the parameter personalization discussed with reference to fig. 2.

The assistance system 1 includes a parameter adaptation module 12. The assistance system 1 determines and executes support actions for assisting the user of the ego-vehicle 2 in operating the ego-vehicle 2 based on system parameters of the assistance system 1.

The system parameter (parameter) of the driving assistance system 1 may be a threshold value for a cost function used to determine on executing or dispense with executing a particular support action in response to a predicted situation in the environment of the ego-vehicle 2.

A personalization module 6 obtains user information of the user U in response to the executed support action. The personalization module 6 senses human feedback in response to the executed support action.

The personalization module 6 of fig. 3 includes a human feedback module 7 that determines a user state based on the acquired user information. The human feedback module 7 may use user information acquired by a camera sensing facial expressions of the user U or a microphone sensing acoustic signals including speech output of the user U in the ego-vehicle 2.

A parameter offset determination module 8 of the personalization module 6 determines a parameter offset for at least one system parameter of the assistance system 1 based on the determined human state of the human U.

The personalization module 6 provides the determined parameter adaptation offset to a constraint determination module 9. The constraint determination module 9 determines the constraints for the personalization of the system parameter by the parameter adaption offset obtained from the personalization module 6.

The constraint determination module 9 of the embodiment of fig. 3 includes a system-relation module 10 and a risk prediction module 11. Alternatively, the constraint determination module 9 includes at least one of the system-relation estimation module 10 and the risk prediction module 11.

The system-relation estimation module 10 determines a scaling factor c_{factor, 1} (first scaling factor) for scaling the parameter adaptation offset based on the acquired user information. The system-relation estimation module 10 determines a scaling factor c_{factor, 1}. The scaling factor c_{factor,1} determines whether the feedback obtained from the user is directed (related to) the executed support action, and constitutes a helpful user feedback. Hence, the system-relation estimation module 10 enables to refrain from adapting system parameters of the assistance system 1 in case the feedback of the user was determined as unrelated to the executed support action.

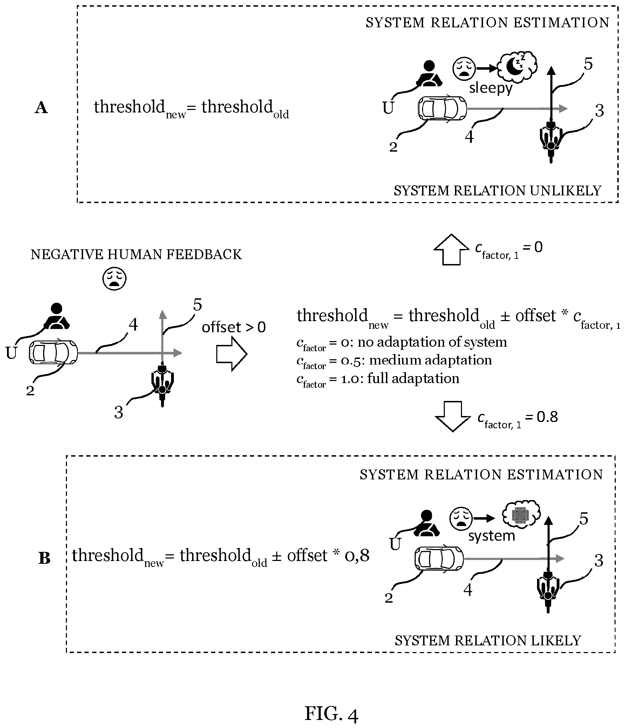

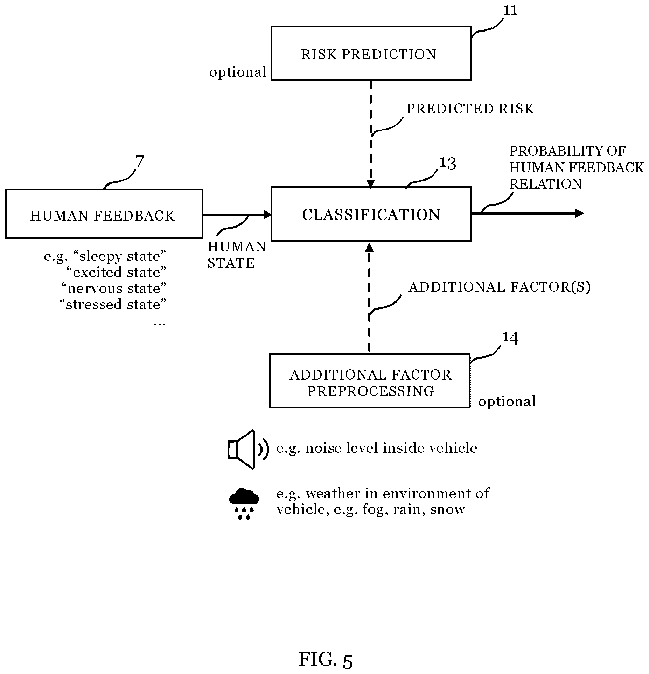

The processing of the system-relation estimation module 10 is discussed with reference to figs. 4 and 5 in detail.

The risk prediction module 11 determines a scaling factor c_{factor, 2} (second scaling factor) for scaling the parameter adaptation offset based on a predicted risk related to a situation, in which the assistance system 1 executed the support action. The risk prediction module 11 predicts a risk related to the traffic situation in which the assistance system 1 executed the support action. Thus, the risk prediction module 11 determines whether the traffic situation was critical during execution of the support action by the assistance system 1. The risk prediction module 10 enables to refrain from adapting system parameters of the assistance system 1 in case the traffic situation is determined as having been critical while executing the support action.

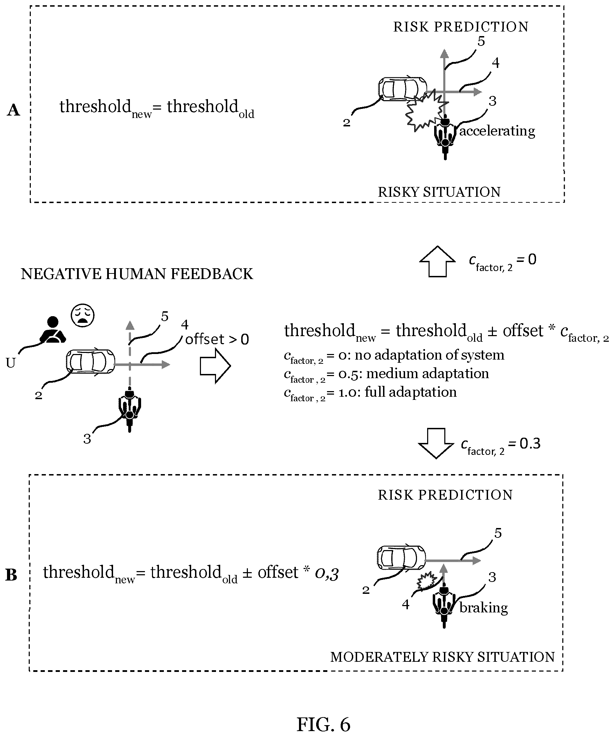

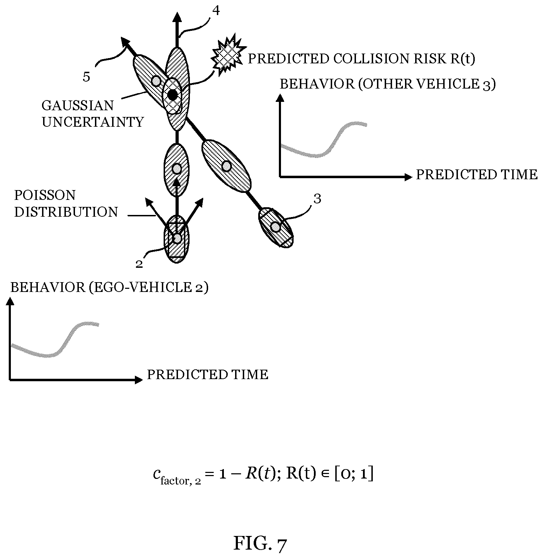

The processing of the risk prediction module 11 is discussed with reference to figs. 6 and 7 in detail.

The system constraint determination module 9 provides the determined at least one scaling factor c_{factor, 1}, c_{factor, 2} and the parameter adaptation offset to the assistance system 1 for generating the at least one personalized parameter by adapting the at least one parameter with a determined correction value based on the parameter adaptation offset and the at least one scaling factor c_{factor, 1}, c_{factor, 2}.

Alternatively, the system constraint determination module 9 generates the correction value by adapting the parameter adaptation offset using the at least one scaling factor c_{factor, 2}, c_{factor,1}, and provides the generated correction value to the assistance system 1.

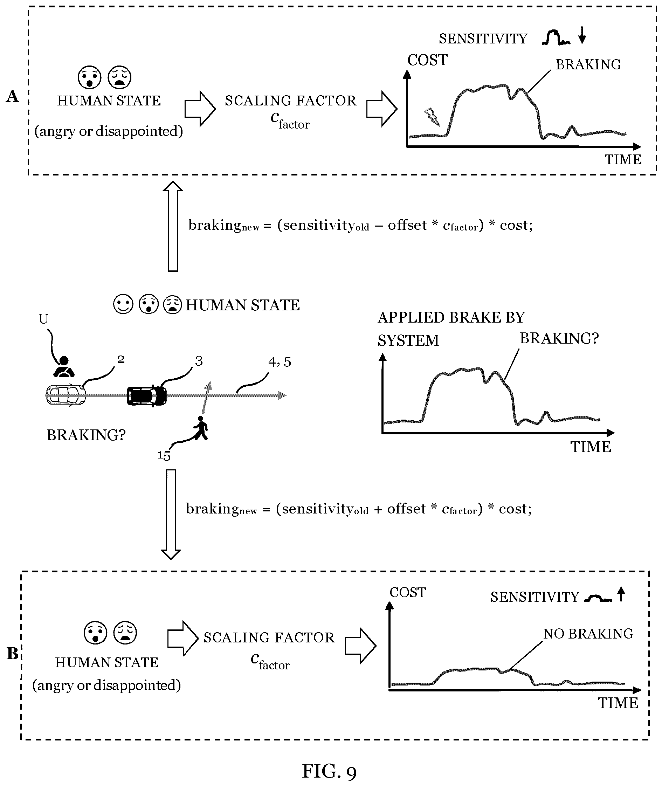

The parameter offset determination module 8 of an alternative embodiment may determine the parameter offset for at least one system parameter of the assistance system 1 based on the determined human state of the human U, the predicted risk, and current system parameter value. This particular embodiment is discussed with reference to fig. 9 in more detail.

Fig. 4 shows a first embodiment of the computer-implemented method in the intersection collision scenario introduced when discussing fig. 2.

The first embodiment includes the system-relation estimation module 10 for determining the scaling factor c_{factor, 1} for scaling the parameter adaptation offset based on the acquired user information. The system-relation estimation module 10 determines in the scaling factor c_{factor,1} whether the feedback obtained from the user is (related to) the executed support action, and the feedback represents a helpful user feedback.

The system-relation estimation module 10 of the first embodiment determines the correction value based on the information on the user reaction in response to the executed support action.

The determined correction value comprises at least one parameter adaptation offset and the offset scaling factor c_{factor, 1}.

In particular, the system-relation estimation module 10 determines the correction value as a multiplication of the at least one parameter adaptation offset with the offset scaling factor c_{factor, 1}. The parameter adaptation module 12 then determines a new personalized system parameter of the assistance system 1 by adapting the at least one parameter with the determined correction value, e.g., according to expression (1) ${threshold}_{new} = {threshold}_{old} \pm offset * {c}_{factor , 1 ;}$

In expression (1), the term "threshold_{new}" denotes a new personalized system parameter, the term "threshold_{old}" a current value of the system parameter used by the assistance system 1 for executing the support action, the term "offset" the determined parameter adaptation offset, and the term "*c*_{factor, 1}" the offset scaling factor.

The offset scaling factor *c*_{factor, 1} has the value 0 in cases in which the system-relation estimation module 10 determines that the determined user state indicates that the acquired user information indicates no relevant user reaction to the executed support action. In this case, illustrated in the upper partial figure denoted by "A" in fig. 4, the new personalized system parameter threshold_{new} corresponds to the current value of the system parameter threshold_{old}. The at least one system parameter is not personalized, as no relevant user reaction to the executed support action can be determined.

The case of partial figure A of fig. 4, may occur in a case in which the human feedback module 7 determines the acquired user information including an apparent negative feedback of the user U results from the user U being in sleepy state, as illustrated in fig. 4. The system-relation estimation module 10 determines the offset scaling factor *c*_{factor, 1} with a value of 1.0 because the negative user reaction does not have relevance to the executed support action.

Alternatively, the system-relation estimation module 10 may determine the offset scaling factor *c*_{factor, 1} with a value of 0.5 in cases in which the system-relation estimation module 10 determines that the determined user state indicates that the acquired user information indicates a relevant user reaction of some relevance (medium relevance) to the executed support action.

Alternatively, the system-relation estimation module 10 may determine the offset scaling factor *c*_{factor, 1} with a value of 1.0 in cases in which the system-relation estimation module 10 determines that the determined user state indicates that the acquired user information indicates a relevant user reaction with certainty to the executed support action.

In the illustrated example in the lower partial figure denoted by "B" in fig. 4, the personalized new system parameter threshold_{new} corresponds to the current value of the system parameter threshold_{old} with an added or respectively subtracted correction value that corresponds to the determined parameter adaptation offset multiplied by the respective offset scaling factor *c*_{factor, 1} with a value of 0.8, which indicates a high relevance of the acquired user information indicating a relevant user reaction with certainty to the executed support action.

In expression (1) the sign "+" corresponds to an example, in which a negative feedback by the user U towards an executed warning as support action results in an increase of the threshold for the cost function for determining whether to output a warning of a potential collision to the user U. In consequence, the increased new personalized threshold value results in determining to output a warning signal only in examples in which the cost function has increased values when compared to the threshold value threshold_{old}. The sign "-" corresponds to an example, in which a negative feedback by the user U towards an executed warning as support action results in a decrease of the threshold for the cost function for determining whether to output a warning of a potential collision to the user U. Hence, the assistance system 1 will earlier and more often warn the user U of a predicted collision than in examples in which the cost function is compared to the current threshold value threshold_{old}.

The first embodiment uses the scaling factor *c*_{factor, 1} to weight the parameter adaptation offset. By weighting the parameter adaptation offset with the scaling factor *c*_{factor, 1}, the assistance system 1 achieves an improved personalized driver support when operating using the personalized system parameter threshold_{new}.

The scaling factor *c*_{factor, 1} may be determined with a binary classification using the user state information (user state), e.g. having values of either 0 or 1.

Alternatively, the system-relation estimation module 10 may determine the offset scaling factor *c*_{factor, 1} having a discrete value in a numerical range between 0 and 1.

Alternatively, the system-relation estimation module 10 may determine the offset scaling factor *c*_{factor, 1} having an analogue or continuous value in the numerical range between 0 and 1. For example, the system-relation estimation module 10 may determine the offset scaling factor *c*_{factor, 1} dependent on a probability of the human state determined in the user information relating to the executed system action.

Fig. 5 illustrates the process of system relation estimation for determining the correction value.

The embodiment of fig. 5 determines the probability of the user reaction relating to the executed support action by estimating a human state of the user U and determining based on the estimated human state the probability of the user reaction relating to the executed support action.

In particular, fig. 5 illustrates an embodiment of using an estimated probability for the human feedback relation to the support action for determining the offset scaling factor c_{factor,1}.

The system-relation estimation module 10 determines the offset scaling factor *c*_{factor, 1} based on a probability of the human state determined by the human feedback module 7 using the acquired user information on the user U relating to the executed system action, as formulated in expression (2) ${c}_{factor , 1} = {P}_{relation} \left(t\right) ;$

In expression (2), the term *c*_{factor, 1} denotes the offset scaling factor and the term *P*ᵣₑₗₐₜᵢₒₙ (t) denotes a probability of the user state relating to the executed support action. The feedback module 7 determines the user state based on the acquired user information. The user state (human state) of the user U may include one of a "sleepy state", an "excited state", a "nervous state", and a "stressed state". The user information on the user U includes in particular information on the user reaction to the executed support action.

The determined user state includes information on a state of the user (human state of the user) and even may further include information on a human state of at least one passenger of the ego-vehicle 2.

The system-relation estimation module 10 may determine the probability of the user reaction relating to the executed support action by using a classification model or a regression. The system-relation estimation module 10 shown in fig. 5 includes a classification module 13. The classification model in a particular embodiment is a binary classification model, which determines, based on the input information to the classification module 13, whether the determined human state of the user U relates to the executed support action or whether the determined human state of the user U is unrelated to the executed support action.

The classification module 13 may use machine-learning based models to determine the probability of the user reaction relating to the executed support action.

The classification module 13 may use, e.g., a logistic regression, support vector machines, or random forest (random decision forest) based processes in particular embodiments.

The classification module 13 may also use vision-language models in particular implementations.

The human feedback module 7 may use a multi-class classification for determining the human state, using e.g., signals from a plurality of sensors as input. The plurality of sensors may include heart rate sensors, perspiration sensors, imaging sensors, and acoustic sensors.

The classification module 13 uses the human state determined by the human feedback module 7 for determining the probability of the user reaction relating to the to the executed support action. For example, the user U estimated to be in sleepy state based on his facial expressions may react negatively in response to a support action executed by the assistance system 1. However, the support action may be helpful or necessary. Determining the probability of the user reaction relating to the executed support action in the classification module 13 enables to constrain the personification of parameters, e.g., a warning threshold based on the determined relevance.

The classification module 13 may use additional factors in combination with the human state determined by the human feedback module 7 for determining the probability of the user reaction relating to the to the executed support action.

An optional additional-factor preprocessing module 14 in the illustrated embodiment of fig. 5 may acquire further information, e.g. a noise level in the ego-vehicle 2, or weather information on the current weather in the environment of the ego-vehicle 2 and provide the processed additional information as additional factors to the classification module 13. Weather events such as rain, snow, fog, e.g., may also present influential factors for determining the probability of the user reaction relating to the executed support action. Instead of relating a negative reaction of the user U to the executed support action, the negative reaction may be in response to an excessive noise level of passengers inside the ego-vehicle 2 on the backseat, for example.

A further, optional, additional factor in the illustrated embodiment of fig. 5 that the classification module 13 takes into account may be a predicted risk of the situation in the environment of the ego-vehicle 2 when executing the support action. The risk prediction module 11 may provide a predicted risk as input in addition to the human state of the user U to the classification module 13. The classification module 13 uses variables referring to the human state and further variables relating to the additional factors, e.g. variables relating to the predicted risk to determine the probability of the user reaction relating to the executed support action.

Fig. 6 shows a second embodiment of the computer-implemented method in the intersection collision scenario.

The second embodiment constrains the personalization of system parameters of the assistance system 1 in order to ensure a safe system support even with the personalized parameters. In the example of the collision warning system, even when operating using the personalized parameters, the assistance system 1 still reliably warns the user U about situations with a high risk in the environment of the ego-vehicle 2. The second embodiment achieves this effect by using a scaling factor *c*_{factor, 2} for weighting the parameter adaptation offset based on a predicted risk in the traffic situation when executing the support action. The second embodiment determines the personalized parameter based on expression (3), which is formulated for a personalized threshold threshold_{new} for a cost function of the assistance system 1. The expression is written as ${threshold}_{new} = {threshold}_{old} \pm offset * {c}_{factor , 2 ;}$ with the current value of the parameter (threshold) threshold_{old} of the assistance system 1, with the term offset denoting the parameter adaptation offset, and the scaling factor *c*_{factor, 2} for weighting the parameter adaptation offset.

If in expression (3), the scaling factor is *c*_{ractor, 2} = 0, the parameter is not adapted, and the personalized threshold threshold_{new} for a cost function of the assistance system 1 corresponds to the value of the parameter (threshold) threshold_{old} of the assistance system 1 while executing the support action.

If in expression (3), the scaling factor is *c*_{factor, 2} = 0.5, the personalized parameter is adapted in a medium extent, and the personalized threshold threshold_{new} for a cost function of the assistance system 1 corresponds to the value of the parameter (threshold) threshold_{old} corrected by a correction value that corresponds to half of the parameter adaptation offset.

If in expression (3), the scaling factor *c*_{ractor, 2} = 1.0, the personalized parameter is adapted using the full correction value, and the personalized threshold threshold_{new} for a cost function of the assistance system 1 corresponds to the value of the parameter (threshold) threshold_{old} corrected by the correction value that corresponds to the full determined parameter adaptation offset.

Fig. 6 illustrates the second scenario for the example of the collision warning system as an example of the assistance system 1. The basic scenario is shown at the center of fig. 6, in which the ego-vehicle operated by the user U is moving along a trajectory 4 towards an intersection. The motorcyclist 3 is also approaching the intersection moving along a trajectory 5 on a road intersecting with the road on which the ego-vehicle is moving.

In the upper portion of fig. 6, partial figure A illustrates an example in which the motorcyclist 3 is accelerating on the trajectory 4. The risk prediction module 11 predicts the situation in the environment of the ego-vehicle 2 as a risky situation. Based on the assessment of the situation as a risky situation, the constraint determination module 9 of the second embodiment determines the correction value based on the predicted risk related to the risky situation, in which the assistance system 1 executed the support action. For the predicted risky situation, the constraint determination module 9 determines the scaling factor as *c*_{factor, 2} = 0. Accordingly, the parameter in the partial figure A of fig. 6 is not adapted by the correction value, although the user U is determined to show a negative user reaction in response to the executed support action.

In the lower portion of fig. 6, partial figure B illustrates an example in which the motorcyclist 3 is braking on the trajectory 4. The risk prediction module 11 predicts the situation in the environment of the ego-vehicle 2 as a moderately risky situation. Based on the assessment of the situation as a moderately risky situation, the constraint determination module 9 of the second embodiment determines the correction value based on the predicted risk related to the moderately risky situation, in which the assistance system 1 executed the support action. For the predicted moderately risky situation, the constraint determination module 9 determines the scaling factor as *c*_{factor, 2} = 0.3. Accordingly, the parameter in the partial figure B of fig. 6 is adapted by the correction value including a weight of 0.3 with the determined parameter adaptation offset, although the user U is determined to show a negative user reaction in response to the executed support action.

As the discussed examples for the second embodiment illustrate, the proposed assistance system 1 including an improved method for personalization of parameter(s) of the assistance system offers the capability to personalize the parameters for offering driving assistance to the user while simultaneously ensuring safety of the provided assistance due to the personalization constraint based on a predicted risk.

Fig. 7 illustrates the process of risk prediction for estimating the correction value.

The correction value of the second embodiment includes the parameter adaptation offset and the offset scaling factor *c*_{factor, 2} . The offset scaling factor *c*_{factor, 2}. of the second embodiment may be determined based on the predicted risk value R(t) for a current time t according to expression (4) ${c}_{factor , 2} . \left(t\right) = 1 - R \left(t\right) ;$

For predicting the risk R(t) of a situation (traffic situation) in the environment of the ego-vehicle 2, a number of existing approaches may be used. For example, methods of survival analysis may be used to determine the risk R(t). Details for methods using survival analysis suitable for an implementation are disclosed in publication "Continuous Risk Measures for Driving Support" by Julian Eggert and Tim Puphal, in: International Journal of Automotive Engineering, Volume 9, No. 3 (2018), pages 130 to 137.

The risk prediction module 11 implementing an approach of survival analysis for predicting the risk uses a risk model that determines a collision probability of a collision between the ego-vehicle 2 and other objects, e.g. other vehicles in the environment of the ego-vehicle 2. The risk prediction module 11 uses a representation of the situation, which is generated based on sensor information from sensors 25 of the ego-vehicle 2, and generates predictions of future behaviors of the ego-vehicle 2 and the other vehicles with predicted trajectories 4,5 along paths of the ego-vehicle 2 and the other vehicles, as illustrated in fig. 7. The risk prediction module 11 then computes the risk value R(t) with a value in the range from 0 to 1.

As illustrated in fig. 7, determining the risk value R(t) using the approach of survival analysis may include uncertainties in the behavior of the ego-vehicle 2 and the other vehicle 3, e.g. using Gaussian distributions and Poisson distributions.

The risk prediction module 11 may use further models for including an estimated severity of a predicted collision between the ego-vehicle 2 and the other vehicle 3.

The risk prediction module 11 using approaches of survival analysis as illustrated in fig. 7 may also integrate further risks in addition to a collision risk with other traffic participants for determining the predicted risk.

Further risks may include curve risks related to the danger of the ego-vehicle 2 skidding of the intended path for the ego-vehicle 2 when taking a sharp turn at a high velocity of the ego-vehicle 2.

Further risks may include regulatory risk that results from regulatory velocity limits or areas where driving is prohibited, for example.

The further risks may include occlusion risks due to limited fields of view of the sensors 25 of the ego-vehicle 2, which may result in other vehicles 3 not detected due to being hidden behind buildings or parking vehicles, for example. Patent US 10, 627,812 B2 provides details for an automotive driver assistance for a vehicle approaching an intersection with only limited visibility using a risk measure that is calculated based on virtual traffic entities and predicted behaviors of the vehicle.

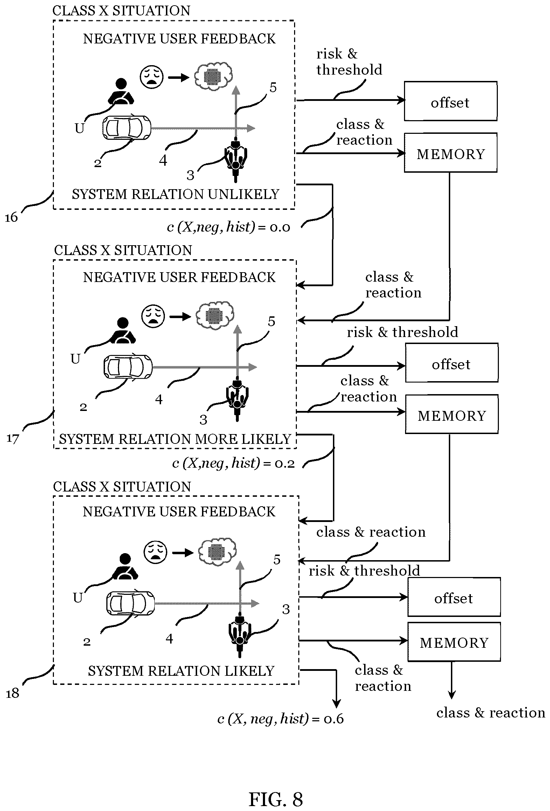

Fig. 8 shows a third embodiment of the computer-implemented method in the assistance system 1 in the intersection collision scenario.

The assistance system 1 of the ego-vehicle 2 assists the user U in operating the ego-vehicle 2. The application scenario of fig. 9 concerns the intersection scenario as discussed with reference to fig. 2 and figs. 4 and 6 of the first and second embodiments. The assistance system 1 of fig. 8 acts as a collision warning system, e.g., the assistance system 1 outputs a warning to the user U in case a cost function determined by the assistance system 1 for the current situation in the environment of the ego-vehicle 1 exceeds a warning threshold.

The assistance system 1 acquires a negative user reaction in response to an executed support action, e.g. output of warning signal due to predicting a significant risk for a collision between the ego-vehicle 2 and the other vehicle 3.

The assistance system 1 of the third embodiment differs from the first and second embodiments of the assistance system 1 in a different processing for determining the correction value for the at least one parameter of the driving assistance system 1. The at least one parameter may be the warning threshold.

The driving assistance system 1 of the third embodiment determines the personalized parameter, in the case of fig. 8 the new personalized threshold threshold_{new}, according to expression (5) ${threshold}_{new} = {threshold}_{old} \pm offset \left(predicted risk, {threshold}_{old}\right) * {c}_{factor} \left(class, reaction, history\right) ;$

In expression (5), the term threshold_{old} refers to the threshold when executing the support action. The term offset (.) refers to the parameter adaptation offset that is in the third embodiment a function of the predicted risk in the situation in the environment of the ego-vehicle 2 when executing the support action and of the current threshold when executing the support action, threshold_{old}.

In particular, the parameter adaptation offset of the third embodiment is a function of at least one of the risk magnitude and the risk rate (risk frequency) of the predicted risk in the situation in the environment of the ego-vehicle 2 when executing the support action. The assistance system 1 according to the third embodiment uses at least one of the risk magnitude and the risk rate to optimize the threshold adaptation offset for determining the correction value for adapting the at least one parameter of the assistance system 1 for personalization to the user U.

The specific way of determining the parameter adaptation offset in the third embodiment enables to restrict the parameter adaptations to a range of values between a minimum value and a maximum value.

In expression (5), the offset scaling factor c_{factor}(.) is a function of (depends on) a class of the situation in the environment of the ego-vehicle 2 when executing the support action, the acquired user information corresponding to a user reaction of the user U in response to the executed support action, and a history of user reactions to executed support actions of the same class stored in a memory 22.

Hence, the assistance system 1 of the third embodiment enables to differentiate between immediate reactions of the user U to executed support actions, and reactions of the user U to executed support actions in comparable instances of situations. The assistance system according to the third embodiment uses a storage, e.g. implemented in a memory 22, storing classes of situations in the environment of the ego-vehicle 2 associated with the corresponding user reaction in response to an executed support action for the instance of the situation.

The third embodiment achieves an improved personalized driver support of the user U by considering a current reaction of the user U in response to an executed support action in relation to previous instances of the situation, the respectively executed support actions, and the corresponding reactions of the user U.

The processing for personalization of at least one parameter of the assistance system 1 in the third embodiment illustrated by fig. 8 includes the assistance system 1 of the ego-vehicle 2 assisting the user U in instances of a situation in the environment, which the assistance system 1 determines to belong to a particular class X of situations. The system parameter of the assistance system 1 for personalization is a warning threshold.

In instance 16 of the class X situation, the assistance system 1 uses a predicted risk provided by the risk prediction module 11 and the current value of the threshold_{old} to determine the parameter adaptation offset.

Due to the instance 16 being the first instance of the class X situation for the assistance system 1 assisting the user U, the assistance system 1 determines the offset scaling factor c_{factor} (X, negative reaction, history) = o, resulting in not adapting the current value of the system parameter threshold_{old}, as the assistance system 1 determines the correction value based on expression (5) as 0.

In case of instance 16 of the situation, the assistance system 1 assumes the negative reaction of the user U to the executed support action as unlikely.

The assistance system stores the first instance 16 of the class X situation in the memory 22 associated with the negative reaction of the user U in response to the executed support action.

In instance 17 of the class X situation, the assistance system 1 uses a predicted risk provided by the risk prediction module 11 and the current value of the threshold_{old} to determine the parameter adaptation offset.

Due to the instance 17 being a repeated instance of the class X situation for the assistance system 1 assisting the user U, the assistance system 1 determines the offset scaling factor c_{factor} (X, negative reaction, history) = 0.2, resulting in adapting the current value of the system parameter threshold_{old} to a new personalized parameter, as the assistance system 1 determines the correction value based on expression (5) different from 0 as the scaling factor c_{factor} now is 0.2.

The assistance system stores the instance 17 of the repeated class X situation in the memory 22 associated with the negative reaction of the user U in response to the executed support action.

In case of instance 17 that has a previous instance 16 of the situation, the assistance system 1 assumes the negative reaction of the user U to the executed support action as more likely than in the first instance. The determined parameter adaptation offset has some impact on the personalization of the system parameter of the assistance system 1 due to the repeated negative reaction of the user U.

In instance 18 of the class X situation, the assistance system 1 uses the predicted risk provided by the risk prediction module 11 and the current value of the threshold_{old} to determine the parameter adaptation offset as indicated in expression (5).

Due to the instance 18 being again a repeated instance of the class X situation for the assistance system 1 assisting the user U, the assistance system 1 determines the offset scaling factor c_{factor} (X, negative reaction, history) = 0.6, resulting in adapting the current value of the system parameter threshold_{old} to a new personalized parameter, as the assistance system 1 determines the correction value based on expression (5) different from 0 as the scaling factor cf_{actor} now is 0.6.

The assistance system stores the instance 18 of the repeated class X situation in the memory 22 associated with the negative reaction of the user U in response to the executed support action.

In case of instance 18 that has a previous instance 16 of the situation, the assistance system 1 assumes the negative reaction of the user U to the executed support action as relating to the executed support action as likely. The assistance system 1 increases the correction value when compared to the first instance 16 and the previous instance 17 of the situation in the environment that is classified as a class X situation by the assistance system 1. As a result, the personalization of the assistance system 1 assisting the user U shows an increased impact of the parameter adaptation offset due to the respective scaling factor c_{factor} when compared with the occurrences of the previous instances 16, 17.

Fig. 9 illustrates an application scenario of an emergency brake system as an example of an assistance system 1 in an intersection collision scenario.

Embodiments of the assistance system 1 including the personalization of system parameters using the scaling factor for constraining the parameter adaptation offset have been described using a collision warning system as an example. Fig. 9 illustrates an example of the assistance system 1 providing driving control assistance, e.g. using an emergency brake system.

The emergency brake system corresponds in many aspects to the collision warning system as discussed with reference to fig. 2, for example. If in the example of the emergency brake system the cost computed by the assistance system based on the current situation in the environment increases and reaches or even exceeds a brake threshold, the assistance system 1 including the emergency brake system controls a controller 23 of the ego-vehicle 2 to apply brakes in order to decelerate or even stop the ego-vehicle 2.

The controller 23 performs the function of a controller of a brake assist system of the ego-vehicle 2. The brake threshold of the emergency brake system corresponds to the warning threshold of the warning system of fig. 2 and represents one example of a system parameter of the assistance system 1 that may be subject to a personalization to the user U based on a received negative user reaction (user feedback) from the user U.

A further system parameter of the emergency brake system is the sensitivity of the applied brake by the controller 23. As indicated in the base scenario in the center part of fig. 9,

An application scenario of the emergency brake system according to the center left portion of fig. 9 includes the ego-vehicle 2 trailing the other vehicle 3 along a road section at a distance, both the ego-vehicle 2 and the other vehicle 3 moving into the same direction on corresponding trajectories 4, 5. A pedestrian 15 is predicted to enter the road in front of the other vehicle 15. The assistance system 1 of the ego-vehicle 2 in the role of the emergency brake system outputs a signal to the controller 23 of applying the brakes of the ego-vehicle 2 predicting that the other vehicle 3 will have to decelerate in order to avoid a collision with the pedestrian 15.

The right-hand figure in the center portion of fig. 9 illustrates the applied brake by the controller 23 under control of the assistance system 1.

The partial figure A of fig. 9 illustrates one potential evolvement of the base scenario of the center portion of fig. 9.

The assistance system 1 of the ego-vehicle 2 executed the braking action.

The assistance system 1 obtains information on a user reaction of the user U in response to the executed brake action, and determines a human state of the user U as an angry state or disappointed state of the user U.

The assistance system 1, in response to the negative human feedback of the user U to the executed braking action reacts by decreasing a sensitivity parameter of the assistance system 1 in order to take into account a false positive error of the assistance system 1 or a too early braking. In particular, the assistance system 1 determines a new personalized sensitivity sensitivity_{new} for the braking action according to expression (6) ${sensitivity}_{new} = \left({sensitivity}_{old}-offset*{c}_{factor}\right) * cost ;$ with the current sensitivity for braking action sensitivity_{old}, the parameter adaptation offset offset, the scaling factor c_{factor}, and the costs (cost function) for the emergency brake assistance cost.

The scaling factor c_{factor} may include at least one of the scaling factor c_{factor,1} determined based on the user reaction in response the executed support action, and the scaling factor c_{factor,2} determined based on the predicted risk related to the situation, in which the assistance system 1 executed the support action.

The scaling factor c_{factor} may include the scaling factor c_{factor,1} multiplied with the scaling factor c_{factor,2} in an embodiment of the assistance system 1.

The personalized parameter of the example of the partial figure A includes a personalized sensitivity that is decreased with regard to the sensitivity when executing the support action.

The partial figure B of fig. 9 illustrates a further potential evolvement of the base scenario of the center portion of fig. 9.

The assistance system 1 of the ego-vehicle 2 executed the brake action achieving only a limited deceleration of the ego-vehicle 2 with respect to the vehicle 3, or the assistance system 1 did not control application of the brakes by the controller 23 at all.

The assistance system 1 now obtains information on a user reaction of the user U in response to the executed brake action, and determines a human state of the user U as an angry state or disappointed state of the user U.

The assistance system 1, in response to the negative human feedback of the user U to the executed braking action reacts by increasing a sensitivity parameter of the assistance system 1 in order to take into account a false negative error of the assistance system 1 or a too late braking. In particular, the assistance system 1 determines a new personalized sensitivity sensitivity_{new} for the braking action according to expression (7) ${sensitivity}_{new} = \left({sensitivity}_{old}+offset*{c}_{factor}\right) * cost ;$ with the current sensitivity for braking action sensitivity_{old}, the parameter adaptation offset offset, the scaling factor c_{factor}, and the costs (cost function) for the emergency brake assistance cost.

The scaling factor c_{factor} may include at least one of the scaling factor c_{factor,1} determined based on the user reaction in response the executed support action, and the scaling factor c_{factor,2} determined based on the predicted risk related to the situation, in which the assistance system 1 executed the support action.

The personalized parameter of the example of the partial figure B includes a personalized sensitivity that is increased with regard to the current sensitivity when executing the support action.

Fig. 10 illustrates a simplified hardware structure of an assistance system for implementing an embodiment.

Fig. 10 illustrates various examples of a system structure suitable to implement embodiments of the method for assisting a human user in operating an agent. The agent of fig. 10 is a road vehicle 2 (ego-vehicle 2) operating in a road traffic environment.

The computer-implemented method for assisting the agent according to an embodiment may be implemented in software executed by at least one processor 21 of the ego-vehicle 2.

In an alternative embodiment, the computer-implemented method is executed in a distributed manner on the processor 21 of the ego-vehicle 2, and of at least one server 30 remote from the ego-vehicle 2.

The server 30 may include a human machine interface, which enables to access, control, or modify the processing of the computer-implemented method and other elements of the assistance system 1.

The server 30 may include one or plural processors, e.g., central processing units (CPU), signal processors, and associated memory, e.g., including random-access memory (RAM), read-only memory (ROM), and disk data storage, flash memory, for naming some known structural elements.

The assistance system 1 of the ego-vehicle 2 may obtain sensor information on the environment of the ego-vehicle A from its own sensors 25 or from sensors externally to the ego-vehicle 2 via the network N and the communication interface 26 of the ego-vehicle 2. In fig. 10, the sensors arranged externally to the ego-vehicle 2 include sensors integrated with the traffic infrastructure, and may include sensors of the sensor suites of other vehicle(s). Sensors may also include a navigation system, e.g. a navigation receiver of a global navigation satellite system (GNSS) providing navigation services using a plurality of navigation satellites 29.

The ego-vehicle 2 includes the plurality of sensors 25 for monitoring the environment of the ego-vehicle 2, and at least one sensor for monitoring the user (driver) of the ego-vehicle 2, and sensors for providing operational information of the ego-vehicle 2. The information acquired from the environment of the ego-vehicle 2 may include information on position, orientation, velocity, acceleration, deceleration, or jerk of the ego-vehicle 2, or any combination thereof, and of other vehicle(s) present in the environment of the ego-vehicle 2.

The information on the ego-vehicle 2 may include information on the position, orientation, velocity, acceleration or deceleration, and jerk of the ego-vehicle 2, on throttle position, steering angle, gear selection, motor parameters, e.g., a rotational speed or a torque value of a drive motor 24 of the ego-vehicle 2.

The assistance system 1 may include a further sensor 27 for monitoring the interior of the ego-vehicle 2, and for monitoring in particular the user U. The at least one further sensor 27 comprises at least one of a microphone for obtaining acoustic information from the user, a camera for capturing image information of the user, and a heart rate sensor for obtaining heart rate information of the user U.

The further sensor 27 may at least in part be implemented using a personal device 28 of the user U. E.g., the personal device 28 may implement a heart rate sensor and provide sensor signals indicating a current heart rate of the user via the network N to the assistance system 1, in particular to the processor 21 for further evaluation.

The information on the user U of the ego-vehicle 2 may include information acquired by a camera or a microphone monitoring the interior of the ego-vehicle 2, including the user and possibly further passengers of the ego-vehicle 2. The information on the user of the ego vehicle 2 may include any piece of information that allows the assistance system 1 to determine a human state used in the computer implemented method according to an embodiment.

The agent, e.g., the ego-agent or the other agent, may include humans with personal computing devices 28, e.g. smart appliances such as smartphones communicating via the network N with other elements in the environment of the ego-agent 2. For example, the driver of the ego-agent 2 may be a human user equipped with a personal device 28 (personal computing device 28).

The ego-vehicle 2 includes a communication interface 26. The communication interface 26 enables wireless communication between the ego-vehicle 2 and other agents, e.g. vehicles, and with infrastructure of the road traffic environment. In particular, the communication interface 26 may enable direct communication with other vehicles in the environment of the ego-vehicle 2, which also have respective communication interfaces 26.

The communication interface 26 may enable communication via a network N with other elements of the road traffic environment. The other elements may include the other vehicles, and server(s) 30.

The communication interface 26 may enable communication via a network N with humans such as pedestrians or cyclists having personal devices 28, e.g., smartphones, which also form part of the road traffic environment.

The communication interface 26 may enable communication to integrate the ego-vehicle 2 into a V2X system by transmitting and receiving signals from other vehicles and traffic infrastructure, for example.

The ego-vehicle 2 of fig. 10 further includes a data storage device 22 (memory 22).

The ego-vehicle 2 of fig. 10 further includes a human machine interface 28 (HMI 28). The HMI 28 may include means for outputting information via different modalities, in particular visually, acoustically, or haptically to the user of the ego-vehicle 2. The HMI 28 forms part of a human machine interface of the assistance system 1 of the ego-vehicle 2. The HMI 28 may include a head-up display for providing the information to the user of the ego-vehicle 2 without requiring the user to divert his attention from the road traffic environment. The HMI 28 may include at least one of at least one loudspeaker for outputting acoustic signals, at least one display for outputting visual signals, or a haptic output means for outputting tactile signals to the driver of the ego-vehicle 2. The processor 21 may change the modality of the output signals to the user. Alternatively or additionally, the processor 21 may adapt the strength, e.g., an output intensity, of the signal conveying the information to the user of the ego-vehicle 2.

The ego-vehicle 2 further includes a vehicle controller 23. The vehicle controller 23 controls movement of the ego-vehicle 2 by controlling drive means 24 based on a control signal generated and outputted by the processor 21. The drive means 24 include motor(s), and brake(s) for accelerating and decelerating the ego-vehicle 2 in a longitudinal, moving direction of the ego-vehicle 2. The drive means 24 may include steering means for controlling a lateral movement of the ego-vehicle 2.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the method does not exclude that a combination of these measures and features cannot be combined in an advantageous implementation.

The features described in the discussion of specific embodiments and depicted in the figures may be combined with each other for the invention defined in the attached claims.

## Claims

1. Computer-implemented method for personalization of an assistance system (1) for assisting a user (U) in operating a vehicle (2), the method comprising:
outputting (S1), by a processor (21), a control signal for executing a support action by the assistance system (1);
acquiring (S2), by at least one sensor (27), information on a user reaction in response to the executed support action;
determining (S3, S4), by the processor (21), a correction value for at least one parameter of the assistance system (1) based on at least one of the acquired information on the user reaction and a predicted risk related to a situation, in which the assistance system (1) executed the support action;
generating (S4), by the processor (21), at least one personalized parameter of the assistance system (1) by adapting the at least one parameter with the determined correction value.

2. Method according to claim 1, wherein
the support action includes at least one of warning, via an output device (28), the user about the predicted risk in the traffic situation, outputting, via the output device (28), a behavior recommendation to the user, and controlling, by a vehicle controller (23), movement of the vehicle (2).

3. Method according to claim 1 or 2, wherein
the determined correction value comprises at least one parameter adaptation offset and an offset scaling factor.

4. Method according to claim 3, wherein the method comprises
determining, by the processor (21), based on the information on the user reaction, a probability for the user reaction relating to the executed support action, and
determining, by the processor (21), the offset scaling factor indicating whether the user reaction relates to the executed support action based on the determined probability.

5. Method according to claim 4, wherein
determining, by the processor (21), the probability of the user reaction relating to the executed support action includes
estimating, by the processor (21), a human state based on the acquired information on the user reaction, and
determining, by the processor (21), based on the estimated human state, the probability of the user reaction relating to the executed support action.

6. Method according to claim 4 or 5, wherein the method includes
determining, by the processor (21), the probability of the user reaction relating to the executed support action based on at least one further parameter,
wherein the at least one further parameter includes at least one of a parameter internally to the vehicle, a parameter externally to the vehicle, and the predicted risk related to the situation.

7. Method according to one of claims 5 or 6, wherein
the estimated human state includes a state of the user and further a human state of at least one passenger of the vehicle.

8. Method according to one of claims 5 to 7, wherein the method includes
determining, by the processor (21), the probability of the user reaction relating to the executed support action by using a classification model or a regression.

9. Method according to one of the preceding claims, wherein
the at least one sensor (27) comprises at least one of a microphone for obtaining acoustic information from the user, a camera for capturing image information of the user, and a heart rate sensor for obtaining heart rate information of the user.

10. Method according to one of the preceding claims, wherein the method comprises
acquiring, by at least one further sensor (25), information on an environment of the vehicle (2), and
generating by the processor (21), a representation of the situation in the environment of the vehicle (2)
predicting the risk related to the situation, in which the assistance system (1) executed the support action.

11. Method according to one of the preceding claims, wherein the method comprises
correcting, by the processor (21), the at least one parameter of the assistance system by increasing or decreasing the at least one parameter with the determined correction value.

12. Method according to claim 3, wherein the method comprises
computing, by the processor (21), the parameter adaptation offset based on the predicted risk and a current value of the at least one parameter.

13. Method according to claim 12, wherein the method comprises
computing, by the processor (21), the offset scaling factor based on a determined class of the situation, information on the user reaction, and stored information on the user reaction in situations of the determined class of the situation.

14. Assistance system for assisting a user (U) in operating a vehicle (2), the assistance system comprising:
a processor (21) configured to output a control signal for executing a support action by the assistance system;
at least one sensor (27) configured to acquire information on a user reaction of the user (U) in response to the executed support action;
the processor (21) is further configured to determine a correction value for at least one parameter of the assistance system based on the acquired information on the user reaction,
to generate at least one personalized parameter of the assistance system by adapting the at least one parameter with the determined correction value; and the assistance system is
**characterized in that**
the processor (21) is configured to determine the correction value based on at least one of the information on the user reaction and a predicted risk related to a situation, in which the assistance system executed the support action.

15. The assistance system according to claim 14, wherein
the vehicle (2) includes at least one of a ground vehicle, air vehicle, sea vehicle, micromobility vehicle, autonomous vehicle, and a semi-autonomous vehicle.
